# EUROPEAN PATENT APPLICATION

(11) **EP 0 775 450 A2**
(43) Date of publication of application: **28.05.1997**
(21) Application number: 96830591.2
(22) Date of filing: 22.11.1996
(51) Int. Cl.: A23L 1/056, A23L 1/0526, A23L 1/304, A23L 1/308

(54) **Dietetic compositions comprising chitosan**

(30) Priority: 24.11.1995 IT RM950772
(71) Applicant: Ar Trade-Invest SA, 6906 Lugano/Cassarate (CH)
(72) Inventor: Littera, Renato c/o SIRC SpA, 20090 CALEPPIO DI SETTALA MILAN (IT)
(74) Representative: Sarpi, Maurizio

(57) **Abstract**

There is disclosed the use of the combination of chitosan with other polysaccharides having a high fibre content as dietetic products for the reduction of the body weight and the lipid absorption. The combination of chitosan provided with an electrostatic charge with guar flour is particularly disclosed.

## Description

The present invention relates to a product useful in the low-calorie diets for the reduction of the body weight and in the nourishment of subjects with changed lipid and glucide metabolism.

More particularly the invention relates to the use of preparations based on the combination of chitosan in its form provided with an electrostatic charge with other substances of neutral nature having a high fibre content, such as guar flour, as dietetic products for the reduction of the weight and in the keep diets.

The combination of chitosan provided with an electrostatic charge with other substances having a high content of soluble, non-acid fibres has been devised on the base of their common capability of absorbing lipids and the experimental test that the basic nature of chitosan does not allow other polysaccharides of acid nature to be present at the same time on pain of a considerable reduction of the capability of binding fats.

Moreover guar flour compensates the reduction of density of the faeces which may arise as a result of the administering of pure chitosan, thus giving the product according to the invention no particular contraindications for a protracted use.

The product for oral administering may be supplied in the common unit doses such as capsules, tablets and dragées. After oral administering in tablet, chitosan is active in the stomach and intestine upon solubilization in the acid gastric juice.

Chitosan widely described in the literature as early as the beginning of last century is a water-soluble, deacetylate derivative of chitin which is one of the main natural constituents of the exoskeleton, the hard shell of the crustaceans.

It should be appreciated that both chitin and chitosan are polysaccharides having basic characteristics unlike most polysaccharides (cellulose, dextran, pectin, alginic acid, agar-agar, starch, carrageenin, heparin) which are instead neutral or acid.

Chitosan has important chemical, biochemical properties which have attracted the interest of a number of researchers for some time. The use of chitosan as haemostatic and cicatrization agent is known: it has been tested for the healing of skin lesions due to infections, burns and wounds. Membranes and sutures of chitosan are used in dental surgery: the treatment of dental sacs allows the gum tissue to be regenerated and perform an osteoinductive action. A number of studies have pointed out an effective bacteriostatic activity of chitosan above all towards bacteria and fungi of the skin such as Staphylococcus epidermidis and fungus Candida tropicalis. Derivatives of chitosan are used for contact lenses and for surgical sutures in the treatment of the cataract. Such applications prove the good compatibility between the tissue of the human body and chitosan with its derivatives.

From U.S.A. Patent No. 4,223,023 (FURDA) it is known that the lipid absorption in mammals is reduced by the oral administering of chitosan in the form of a complex fat acid. The following acids are suitable for the formation of complex acids: linoleic acid, palmitic acid, stearic acid, and linolenic acid. Complex acids are prepared by only mixing chitosan with a fat acid emulsion. The dose of chitosan is between 3 and 12 grams, preferably 4-7 grams/day before meals. Such results do not encourage to the use of chitosan in the diets. Actually, as the fibre content of chitosan is 62%, it would be necessary to give the patient at least 7 grams/day of product in order to provide a daily supply of 4 grams of soluble fibres as requested by the regulations in force for the dietetic products. Such a dose expressed into number of tablets is equivalent to 12 tablets/day, a too high amount that the patient cannot stand.

It is important to point out that the hitherto performed investigations relate to chitosan produced by a conventional transformation process providing the deacetylation of chitin with NaOH at high temperature and the following solubilization in organic acid to make it water-soluble.

In recent years, Norwegian researchers conceived an innovatory process for the extraction and the purification of not digestible chitosan having an electrostatic charge and being then capable of binding lipids in gastroenteric environment by electromagnetic attraction, thus avoiding the absorption thereof.

Such a bond develops particularly between positive amine groups of chitosan and negative carboxylic groups of the free fat acids and the biliary acids. Furthermore, bonds of the hydrophobic type involving neutral fats such as triglycerides are also established. Such magnetic bond is much stronger than that established with other substances and fibres.

The hitherto performed investigations suggest that chitosan acting as fat-binder is capable of a reduction of the biological disposability of the lipid amount introduced by a diet so that the calories of such diet are also reduced.

Such an action which may be defined a real lipid trap involves a reduction of the lipid absorption and gives a specific indication of the use of chitosan in the therapy of the excess weight and the fatness.

In a test investigation carried out by the Clinic Nourishment Unit of the National Institute For The Cancer Research of Genoa, the oral administering of chitosan provided with an electrostatic charge in the dose of 1 g before lunch and 1 g before dinner for a month to 18 subjects having an excess of weight caused a weight reduction varying from 3.2 to 6.1 kg with a slimming of 1.1-3.9 kg within the first 10 days. At the same time all of the subjects were invited to follow a standard low-calorie diet.

On the other hand, among polysaccharides with high fibre content the role which may be played by the guar flour combined with chitosan has been pointed out.

There are a number of scientific evidences proving that the use of guar flour in the human nourishment assists in the reduction of the absorption of calories and increases the satiety degree of the consumer due to the capability of production of a viscous gel. At the same time, the guar flour has the advantage of a low viscosity at low concentration, therefore, there is no risk that chitosan reduces its activity of binding fats as a result of an inclusion.

Additionally, guar flour is a polysaccharide of the neutral type, a fundamental condition for assuring that, after oral administering, a tablet of chitosan, as already mentioned above, may be activated in the stomach and the intestine upon solubilization due to the acid gastric juice.

Several clinical trials prove the marked efficiency of the combination of chitosan with guar flour in the reduction of the calorie amount absorbed in the intestine relative to the calorie amount of the food. Such a specific property of chitosan is enhanced in the presence of guar flour, as shown in the annexed diagrams. Particularly, the diagram of Fig. 1 shows that the administering of chitosan in combination with guar flour to subjects having an excess of weight brings to a weight reduction varying from 4 to 7 kg after 4 weeks treatment. In addition to such priority effect, a reduction of the blood pressure in obese, hypertensive subjects is observed.

From the conducted experiments the Applicant has observed that the best results are achieved with daily administering of 1.5 to 2.5 grams of chitosan provided with an electrostatic charge together with 1 to 1.5 grams of guar flour.

The preferred dosing unit is a tablet having a weight content of chitosan and other fibres sufficient for establishing a daily mean administering of 2 tablets before lunch and 2 tablets before dinner. Supplementary substances such as zinc, iron and copper are also present due to the fact that a fibre administering for a protracted time may generally bring to a lack of such nutrients.

The tablets should be swallowed with generous liquid a few minutes before meals.

The present invention is illustrated but not limited by the following formulation.

**TABLETS FOR ORAL ADMINISTERING**

| Ingredients | 0,9 g tablet content | Content for 100 g |
|---|---|---|
| Chitosan | 450 mg | 50 g |
| Guar flour | 314 mg | 35 g |
| Iron gluconate | 3,75 mg | 0,42 g |
| Zinc sulphate | 3,50 mg | 0,38 g |
| Copper gluconate | 0,50 mg | 0,06 g |

Excipients : microcristalline cellulose, magnesium stearate, starch, qs.

## Claims

1. Use of chitosan in combination with other soluble polysaccharides having a high fibre content in dietetic preparations useful to the reduction of the lipid absorption and/or the body weight.

2. Use of chitosan provided with an electrostatic charge in combination with other soluble polysaccharides having a high content of neutral fibres in dietetic preparations useful to the reduction of the lipid absorption and/or the body weight.

3. Use of chitosan provided with an electrostatic charge in combination with guar flour in preparations useful to the reduction of the lipid absorption and/or the body weight.

4. Dietetic preparation useful to the reduction of the lipid absorption and/or the body weight including chitosan provided with an electrostatic charge in combination with guar flour.

5. The dietetic preparation of claim 4, characterized in that the active constituents are present in the dose unit in the following weight proportions:
| | |
|---|---|
| Chitosan | 40-60% |
| Guar flour | 25-35% |

6. The dietetic preparation of claims 4 and 5, characterized in that the dose unit is a tablet containing:
| | |
|---|---|
| Chitosan | 450 mg |
| Guar flour | 314 mg |
| Iron gluconate | 3,75 mg |
| Zinc sulphonate | 3,50 mg |
| Copper gluconate | 0,50 mg |
and suitable excipients.
